# EUROPÄISCHE PATENTSCHRIFT

(11) **EP 2 815 129 B1**
(45) Veröffentlichungstag und Bekanntmachung des Hinweises auf die Patenterteilung: **25.08.2021**
(21) Anmeldenummer: 12779078.0
(22) Anmeldetag: 01.11.2012
(51) Int. Cl.: F04D 29/08, F04D 29/42, F04D 1/06, F16J 15/02

(54) **DICHTUNGSANORDNUNG UND PUMPE MIT EINER DICHTUNGSANORDNUNG**
SEALING ASSEMBLY AND PUMP WITH A SEALING ASSEMBLY
AGENCEMENT DE JOINT ET POMPE DOTÉE D'UN AGENCEMENT DE JOINT

(30) Priorität: 14.02.2012 EP 12155346
(43) Veröffentlichungstag der Anmeldung: 24.12.2014
(73) Patentinhaber: Sulzer Management AG, 8401 Winterthur (CH)
(72) Erfinder: MEUTER, Paul, CH-8472 Seuzach (CH); WELSCHINGER, Thomas, 78315 Radolfzell (DE)
(74) Vertreter: IPS Irsch AG
(86) Internationale Anmeldenummer: PCT/EP2012/071654
(87) Internationale Veröffentlichungsnummer: WO 2013/120549

(56) Entgegenhaltungen:
- EP-A1- 0 766 007
- EP-A1- 2 679 824
- WO-A1-2012/114554
- DE-U1-202005 006 997
- US-A- 4 244 675
- US-A1- 2011 318 205

## Beschreibung

Die Erfindung betrifft eine Dichtungsanordnung gemäß dem Oberbegriff des Anspruchs 1 und eine Pumpe mit einer Dichtungsanordnung.

Die EP 766007 A1 beschreibt derartige Dichtungsanordnungen und Pumpen.

Druckräume, beispielsweise von Pumpen, müssen gegenüber ihrer Umgebung abgedichtet werden. Dies ist insbesondere an Stellen notwendig, an denen zwei Bauteile wie beispielsweise ein Gehäuse und ein Deckel eines Druckraums zusammengefügt werden. Dabei können Spalte entstehen, durch die im Falle eines Hochdruckraums ein im Druckraum enthaltenes Fluid austreten kann. Die Spalte entstehen beispielsweise auf Grund von Bauteiltoleranzen oder unterschiedlichem thermischen Ausdehnungsverhalten der verschiedenen Bauteile. Ein weiterer wichtiger Grund für das Auftreten von Spalten sind Verformungen der Bauteile auf Grund von hohen Drücken im Druckraum. Zur Abdichtung derartiger Spalte sind unterschiedliche Dichtungsanordnungen, beispielsweise unter Verwendung eines so genannten O-Rings bekannt, der meist aus einem Elastomer-Werkstoff hergestellt ist. Die Anforderungen an derartige Dichtungsanordnung hängen von unterschiedlichen Parametern, wie beispielsweise den anliegenden Drücken, herrschenden Temperaturen oder dem Spaltmass ab. Beispielsweise kann es bei der Verwendung von elastomeren O-Ringen bei hohen Drücken und grossen Spaltmassen zu einer so genannten Extrusion von Material des O-Rings in den Spalt in Richtung des niedrigeren Drucks kommen. Dabei wird der O-Ring in den Spalt gedrückt, was zu einer Beschädigung des O-Rings und damit zum Versagen der Dichtungsanordnung zu unerwünschter Leckage an der Dichtungsanordnung führt.

Zur Verhinderung einer Extrusion eines O-Rings sind so genannte Stützringe bekannt, die beispielsweise einen rechteckigen Querschnitt aufweisen. Derartige Stützringe werden als zusätzliches Bauteil auf der druckabgewandten Seite des O-Rings angeordnet und verhindern die Extrusion des O-Rings in den Spalt. Sie übernehmen dabei aber keine Dichtfunktion. Beispielsweise beschreibt die DE 100 00 084 A1 einen Stützring zur Verhinderung der Extrusion eines elastomeren O-Rings.

Eine andere Möglichkeit, die Funktionsfähigkeit der Dichtungsanordnung aufrecht zu erhalten, besteht darin, die Bildung von Spalten während des Betriebs beispielsweise der Pumpe zu begrenzen. Dazu können die Bauteile, zwischen denen der Spalt entsteht, so steif ausgeführt werden, dass auch bei hohen Drücken nur so geringe Spaltmasse auftreten, dass die Funktionstüchtigkeit der Dichtungsanordnung nicht gefährdet ist. Um dies zu erreichen, können beispielsweise grosse Wandstärken und/oder aufwändige Verrippungen vorgesehen werden.

Bei anderen Dichtungsanordnungen, welche beispielsweise O-Ringe aus Metall oder Flachdichtungen verwenden, stellt eine Extrusion des Dichtelements kein Problem dar. Allerdings funktionieren derartige Dichtungsanordnungen nur bei vergleichsweise kleinen Spaltmassen zuverlässig. Damit dürfen die Spaltmasse auch bei derartigen Dichtungsanordnungen nicht zu gross werden.

Demgegenüber ist es die Aufgabe der Erfindung, eine kostengünstige und funktionssichere Dichtungsanordnung für einen Hochdruckraum vorzuschlagen. Erfindungsgemäß wird diese Aufgabe mit einer Dichtungsanordnung mit den Merkmalen des Anspruchs 1 gelöst.

Die Dichtungsanordnung für einen Hochdruckraum weist ein Begrenzungselement mit einer äusseren Dichtfläche und ein Abschlusselement mit einer inneren Dichtfläche auf. Die äussere Dichtfläche und die innere Dichtfläche sind dabei so angeordnet, dass über einen Kontakt der beiden Dichtflächen eine Abdichtung des Hochdruckraums erreicht wird. Das Begrenzungselement ist als ein Teil eines Gehäuses des Hochdruckraums oder eine Trennelement zwischen verschiedenen Druckräumen, beispielsweise einer Pumpe ausgeführt. Das Abschlusselement kann beispielsweise als ein Teil des Gehäuses des Hochdruckraums oder eine Trennelement zwischen verschiedenen Druckräumen, beispielsweise einer Pumpe ausgeführt sein. Das Begrenzungselement und das Abschlusselement können beispielsweise miteinander verschraubt werden. Es ist aber beispielsweise auch möglich, dass das Begrenzungselement in das Abschlusselement ohne weitere Befestigungselemente eingefügt wird.

Das Abschlusselement oder das Begrenzungselement können beispielsweise als ein Deckel oder ein Gehäuse einer Pumpe ausgeführt sein. Das Begrenzungselement und das Abschlusselement bilden damit zumindest einen Teil der Begrenzung des Hochdruckraums. Unter einem Hochdruckraum soll in diesem Zusammenhang ein Druckraum verstanden werden, in dem im Betrieb der den Druckraum enthaltenen Anordnung, beispielsweise einer Pumpe, ein höherer Druck als auf der der Dichtungsanordnung gegenüberliegenden Seite herrscht.

Erfindungsgemäss ist das Begrenzungselement so ausgeführt, dass auf Grund des Drucks im Hochdruckraum eine Kraft in Richtung innere Dichtfläche des Abschlusselements auf die äussere Dichtfläche wirken kann. Wie beschrieben ist der Druck im Hochdruckraum im Betrieb der den Hochdruckraum enthaltenden Anordnung höher als der Druck auf der der Dichtungsanordnung abgewandten Seite. Durch die erfindungsgemässe Ausgestaltung der Dichtungsanordnung wirkt durch den Druck im Hochdruckraum eine Kraft auf die äussere Dichtfläche und damit auf einen Teil des Begrenzungselements, welche die äussere Dichtfläche auf die innere Dichtfläche des Abschlusselements drückt.

Das Begrenzungselement ist dazu zumindest im Bereich der äusseren Dichtfläche so weit flexibel ausgeführt, dass es eine Bewegung der inneren Dichtfläche des Abschlusselements ausgleichen kann. Das Begrenzungselement und das Abschlusselement sind beispielsweise aus Stahl gefertigt, wobei Wandstärken so gewählt sind, dass die erforderliche Flexibilität gewährleistet ist.

Damit wird der Ausbildung eines Spalts zwischen den beiden Dichtflächen wirkungsvoll entgegengewirkt und somit die Funktionsfähigkeit der Dichtungsanordnung gewährleistet. Um dies zu erreichen, ist kein zusätzliches Bauteil erforderlich. Es ist vielmehr ausreichend, das Begrenzungselement erfindungsgemäss auszuführen.

Das Begrenzungselement weist im Bereich der äusseren Dichtfläche insbesondere eine zylindrische Grundform auf. Die äussere Dichtfläche kann dabei radial oder axial orientiert sein.

In Ausgestaltung der Erfindung weist das Begrenzungselement einen vorstehenden Kragen auf, der zumindest einen Teil der äusseren Dichtfläche bildet. Der Kragen ist so ausgeführt, dass der Druck im Hochdruckraum auf eine der äusseren Dichtfläche gegenüberliegende Innenfläche des Kragens wirkt. Durch den an der Innenfläche des Kragens anliegenden Druck wirkt eine Kraft in Richtung Abschlusselement auf den vorstehenden Kragen. Damit wirkt eine Kraft in Richtung innere Dichtfläche auf die äussere Dichtfläche. Bei dieser Ausgestaltung kann das Begrenzungselement besonders einfach und damit kostengünstig ausgeführt sein.

In Ausgestaltung der Erfindung weist das Begrenzungselement eine in Richtung Hochdruckraum offene Ausnehmung auf. Durch die Öffnung zum Hochdruckraum hin herrscht in der Ausnehmung derselbe Druck wie im Hochdruckraum. Die Ausnehmung ist so angeordnet, dass zumindest ein Teil der äusseren Dichtfläche zwischen der Ausnehmung und der inneren Dichtfläche des Abschlusselements angeordnet ist. Es kann auch die gesamte Dichtfläche zwischen der Ausnehmung und der inneren Dichtfläche angeordnet sein. Damit weist der Teil des Begrenzungselements mit der äusseren Dichtfläche ebenfalls eine gewisse Flexibilität auf und wird durch den in der Ausnehmung wirkenden Druck in Richtung innere Kontaktfläche gedrückt. Bei dieser Ausgestaltung benötigt das Begrenzungselement sehr wenig Bauraum. Bei einer hauptsächlich zylinderförmigen Ausführung der äusseren Dichtfläche kann das Begrenzungselement in axialer Richtung besonders kurz ausgeführt sein.

In Ausgestaltung der Erfindung ist das Abschlusselement so ausgeführt, dass auf Grund des Drucks im Hochdruckraum eine Kraft in Richtung äussere Dichtfläche auf die innere Dichtfläche wirken kann. Insbesondere weist das Abschlusselement eine zweite, in Richtung Hochdruckraum offene Ausnehmung auf, welche so angeordnet ist, dass zumindest ein Teil der inneren Dichtfläche zwischen der zweiten Ausnehmung und der äusseren Dichtfläche des Begrenzungselements angeordnet ist

Damit werden die innere und die äussere Dichtfläche von beiden Seiten aneinander gedrückt, so eine besonders gute Dichtwirkung erreicht wird.

In Ausgestaltung der Erfindung weist das Begrenzungselement oder das Abschlusselement ein Dichtelement auf, wobei das Dichtelement insbesondere als ein O-Ring aus einem Elastomer-Werkstoff oder aus Metall ausgeführt ist. Es ist auch möglich, dass zwei oder mehr Dichtelemente, insbesondere O-Ringe nebeneinander angeordnet sind. Es ist ebenfalls möglich, dass sowohl das Begrenzungselement, als auch das Abschlusselement ein Dichtelement aufweisen. Das Dichtelement kann auch als eine andersartige Dichtung, beispielsweise in Form einer Metalldichtung, Flachdichtung oder eine Beschichtung beispielsweise mit einem elastischen Material ausgeführt sein. Bei dieser Ausgestaltung der Dichtungsanordnung wird das Dichtelement entweder als zum Begrenzungselement oder zum Abschlusselement zugehörig angesehen. Bei Verwendung eines Dichtelements kann eine besonders gute Abdichtung des Hochdruckraums erreicht werden. Ausserdem können bei Verwendung eines Dichtelements grössere Spaltmasse zugelassen werden.

Der O-Ring kann in einer Nut des Begrenzungselements oder des Abschlusselements angeordnet sein. Es ist aber auch möglich, dass das Begrenzungselement und das Abschlusselement so ausgeführt und angeordnet sind, dass sie einen Aufnahmeraum bilden, in welchem ein O-Ring angeordnet ist. Das Begrenzungselement und das Abschlusselement weisen dazu entsprechende Kanten oder Absätze auf, die insbesondere einen im Querschnitt rechteckigen Aufnahmeraum für den O-Ring bilden. Damit ist es nicht notwendig, eine Nut am Begrenzungselement oder Abschlusselement vorzusehen, was die Herstellung des Begrenzungselements oder des Abschlusselements besonders einfach macht.

Die Vorteile der erfindungsgemässen Dichtungsanordnung kommen insbesondere bei der Verwendung in einer Pumpe zum Tragen. Die Pumpe ist zur Förderung eines gasförmigen oder flüssigen Fluids, wie beispielsweise Wasser, Erdöl oder ähnlichem vorgesehen. In Pumpen können sehr hohe Drücke von bis zu 800 bar herrschen, weshalb funktionssichere Dichtungsanordnungen auch bei auftretenden Deformationen verschiedener Bauteile der Pumpe besonders wichtig sind. Die Dichtungsanordnung kann zur Abdichtung eines Hochdruckraums nach aussen zur Umgebung der Pumpe eingesetzt werden. Es ist aber auch möglich, die erfindungsgemässe Dichtungsanordnung zur Abdichtung von verschiedenen Druckräumen im Innern der Pumpe einzusetzen. Jede Leckage zwischen an sich getrennten Druckräumen der Pumpe führt zu Verlusten und damit verbunden zu höheren Betriebskosten beim Betrieb der Pumpe.

Die Pumpe ist insbesondere als eine mehrstufige Radial-Kreiselpumpe ausgeführt. Bei einer derartigen Pumpe sind wenigsten zwei Pumpenstufen mit jeweils einem Impeller hintereinander angeordnet.

In Ausgestaltung der Erfindung weist die Pumpe wenigstens eine erste und eine zweite, nachgeschaltete Teil-Pumpe auf, wobei der Hochdruckraum insbesondere als ein Ausgangsraum der zweiten Teil-Pumpe ausgeführt ist. Unter "nachgeschaltet" ist dabei zu verstehen, dass ein Ausgang der ersten Teil-Pumpe mit einem Eingang der zweiten Teil-Pumpe verbunden ist. Die beiden Teil-Pumpen können jeweils eine oder auch mehrere Pumpenstufen aufweisen. Das Begrenzungselement ist dabei als ein Trennelement zwischen der ersten und zweiten Teil-Pumpe ausgeführt. Das Begrenzungselement weist dabei insbesondere eine zylindrische Aussenkontur auf, an welcher die äussere Dichtfläche ausgebildet ist. Das Abschlusselement wird dabei insbesondere von einem Aussengehäuse der Pumpe gebildet.

Damit werden Leckagen zwischen Druckräumen im Innern der Pumpe wirkungsvoll verhindert, so dass ein hoher Wirkungsgrad und damit niedrige Betriebskosten der Pumpe ermöglicht werden.

In Ausgestaltung der Erfindung weist die Pumpe einen ersten Pumpenausgang und einen zweiten Pumpenausgang auf, wobei der erste Pumpenausgang mit einem Ausgang der ersten Teil-Pumpe und der zweite Pumpenausgang mit dem Ausgang der zweiten Teil-Pumpe verbunden ist. Damit ist der Druck am ersten Pumpenausgang kleiner als am zweiten Pumpenausgang. Eine derartige Pumpe weist damit zwei verschiedene Ausgangsdrücke auf. Das Begrenzungselement ist dabei zwischen dem ersten und dem zweiten Pumpenausgang angeordnet. Zwischen den beiden Pumpenausgängen herrscht eine besonders grosse Druckdifferenz, weshalb es eine wirkungsvolle Abdichtung der Druckräume besonders wichtig ist.

In Ausgestaltung der Erfindung sind in der Pumpe die erste und die zweite Teil-Pumpe so angeordnet, dass eine erste Strömungsrichtung in der ersten Teil-Pumpe und eine zweite Strömungsrichtung in der zweiten Teil-Pumpe entgegengesetzt orientiert sind. Die genannte Strömungsrichtung bezieht sich dabei auf die Strömungsrichtung in einen Eingang eines Impellers einer Teil-Pumpe. Die Pumpe weist dann eine so genannte back-to-back Anordnung auf. Diese Anordnung hat den Vorteil, dass an den Impellern entstehende Axialkräfte sich zumindest teilweise aufheben und damit eine Lagerung der Pumpe einfacher wird und weniger Bauraum beansprucht. Das Begrenzungselement ist in diesem Fall zwischen dem Ausgang der ersten Teil-Pumpe und einem Eingang der zweiten Teil-Pumpe angeordnet.

In Ausgestaltung der Erfindung weist das Begrenzungselement wenigstens einen Übergangskanal auf. Unter einem Übergangskanal, der auch als "Cross-Over"-Kanal bezeichnet werden kann, ist ein Kanal zu verstehen, der gezielt Fluid von der einen Seite des Begrenzungselements auf die andere Seite führt. Beispielsweise kann bei einer Pumpe mit zwei Pumpenausgängen das Begrenzungselement einen Übergangskanal vom Ausgang der ersten Teil-Pumpe zum ersten Pumpenausgang aufweisen. Bei einer Pumpe in der oben beschriebenen back-to-back Anordnung kann das Begrenzungselement einen ersten Übergangskanal vom Ausgang der ersten Teil-Pumpe zum Eingang der zweiten Teil-Pumpe und einen zweiten Übergangskanal vom Ausgang der zweiten Teil-Pumpe zum Pumpenausgang aufweisen. Damit kann das Begrenzungselement neben der Dichtfunktion noch eine Leitfunktion für das Fluid aufweisen, womit eine Pumpe mit wenigen Bauteilen ermöglicht wird.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: einen Hochdruckraum mit einer axial ausgerichteten Dichtungsanordnung,
- Fig. 2: einen Hochdruckraum mit einer axial ausgerichteten Dichtungsanordnung in einer zweiten Ausführungsform,
- Fig. 3: einen Hochdruckraum mit einer radial ausgerichteten Dichtungsanordnung,
- Fig. 4: einen Hochdruckraum mit einer radial ausgerichteten Dichtungsanordnung in einer zweiten Ausführungsform,
- Fig. 5: einen Dichtungsbereich einer radial ausgerichteten Dichtungsanordnung in einer dritten Ausführungsform, die nicht zur Erfindung gehört,
- Fig. 6: einen Hochdruckraum mit einer radial ausgerichteten Dichtungsanordnung in einer vierten Ausführungsform,
- Fig. 7: einen Dichtungsbereich einer radial ausgerichteten Dichtungsanordnung in einer fünften Ausführungsform,
- Fig. 8: eine Pumpe mit zwei Teil-Pumpen in back-to-back Anordnung und
- Fig. 9: eine Pumpe mit zwei Teil-Pumpen und zwei Pumpenausgängen.

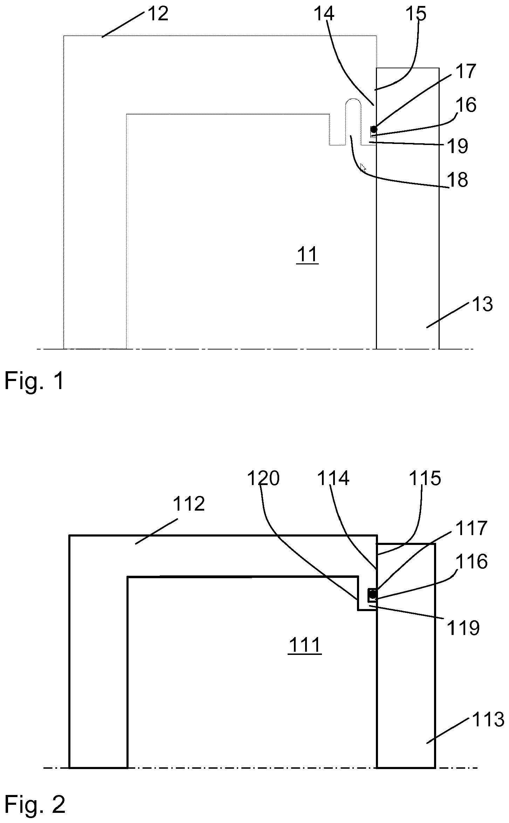

Gemäss Fig. 1 wird ein nur schematisch dargestellter, rotationssymmetrischer Hochdruckraum 11 von einem Begrenzungselement 12 und einem Abschlusselement 13 begrenzt, welche Teil einer Dichtungsanordnung für den Hochdruckraum 11 sind. Das Begrenzungselement 12 weist eine becherförmige Grundform auf und wird durch das scheibenförmige Abschlusselement 13 abgeschlossen. Das Abschlusselement 13 wird durch eine in Fig. 1 nicht dargestellte Verschraubung mit dem Begrenzungselement 12 verbunden. Damit besteht ein Kontakt zwischen einer äusseren Dichtfläche 14 des Begrenzungselements 12 und einer inneren Dichtfläche 15 des Abschlusselements 13. Die äussere Dichtfläche 14 des Begrenzungselements 12 weist eine umlaufende Nut 16 auf, in der ein O-Ring 17 aus einem Elastomer-Material angeordnet ist. Die Nut und der O-Ring können auch im Abschlusselement angeordnet sein. Parallel zu einem dieser O-Ring kann auch ein zweiter O-Ring angeordnet sein.

Das Begrenzungselement 12 weist eine zum Druckraum 11 offene Ausnehmung 18 auf, die so angeordnet ist, dass die Nut 16 und der O-Ring 17 und somit ein Teil der äusseren Kontaktfläche 14 zwischen der Ausnehmung 18 und der inneren Kontaktfläche 15 des Abschlusselements 13 angeordnet sind. Damit ergibt sich am Begrenzungselement 12 ein umlaufender Randbereich 19, an dem die Nut 16 und der O-Ring 17 angeordnet sind. Dieser Randbereich 19 ist zumindest in axialer Richtung in begrenztem Masse elastisch.

Ist der Druck im Hochdruckraum 11 höher als ausserhalb des Hochdruckraums 11, so wirkt auf das Abschlusselement 13 eine Kraft in axialer Richtung nach aussen. Diese Kraft kann so gross sein, dass sich das Abschlusselement 13 nach aussen wölbt. Würde der Randbereich 19 des Begrenzungselements 12 seine Position unverändert beibehalten, so ergäbe sich ein Spalt zwischen dem Begrenzungselement 12 und dem Abschlusselement 13. Dieser Spalt könnte so gross werden, dass der O-Ring 17 in den Spalt nach aussen hinein gedrückt und damit geschädigt wird. Das Hineindrücken eines O-Rings in einen Spalt wird auch als Extrusion bezeichnet.

Durch die Öffnung der Ausnehmung 18 in Richtung Hochdruckraum 11 herrscht in der Ausnehmung 18 der selbe Druck wie im Hochdruckraum 11. Damit wirkt auch auf den Randbereich 19 und damit auch auf die äussere Kontaktfläche 14 des Begrenzungselements 12 eine nach aussen, also in Richtung innere Kontaktfläche 15 des Abschlusselements 13 gerichtete Kraft. Durch die genannte Elastizität des Randbereichs 19 bewegt sich dieser bei einer beschriebenen Wölbung des Abschlusselements 13 entsprechend der Wölbung des Abschlusselements 13 ebenfalls nach aussen. Damit wird die Entstehung eines Spalts zwischen dem Begrenzungselement 12 und dem Abschlusselement 13 verhindert, so dass die Dichtfunktion des O-Rings 17 auch bei einer etwaigen Wölbung des Abschlusselements 13 erhalten bleibt.

In Fig. 2 ist eine zweite Ausführungsform einer Dichtungsanordnung dargestellt. Der Aufbau der Dichtungsanordnung weist dabei viele Gemeinsamkeiten mit der Dichtungsanordnung aus Fig. 1 auf, weshalb nur auf die Unterschiede eingegangen wird.

Ein Begrenzungselement 112 weist einen nach innen orientierten, vorstehenden Kragen 119 auf, der zumindest in axialer Richtung eine gewisse Flexibilität aufweist. An dem Kragen 119 ist ein Teil einer äusseren Kontaktfläche 114 des Begrenzungselements 112, sowie eine umlaufende Nut 116 und ein darin angeordneter O-Ring 117 angeordnet. Die äussere Kontaktfläche 114 des Begrenzungselements 112 und der O-Ring 117 stehen in Kontakt mit einer inneren Kontaktfläche 115 eines Abschlusselements 113.

Der Kragen 119 weist eine zur äusseren Kontaktfläche 114 des Begrenzungselements 112 parallele Innenfläche 120 auf, auf die ein in einem Hochdruckraum 111 herrschender Druck wirkt. Bei einer etwaigen Wölbung des Abschlusselements 113 nach aussen bewegt sich der Kragen 119 des Begrenzungselements 112 analog zum Randbereich 16 aus Fig. 1 ebenfalls nach aussen.

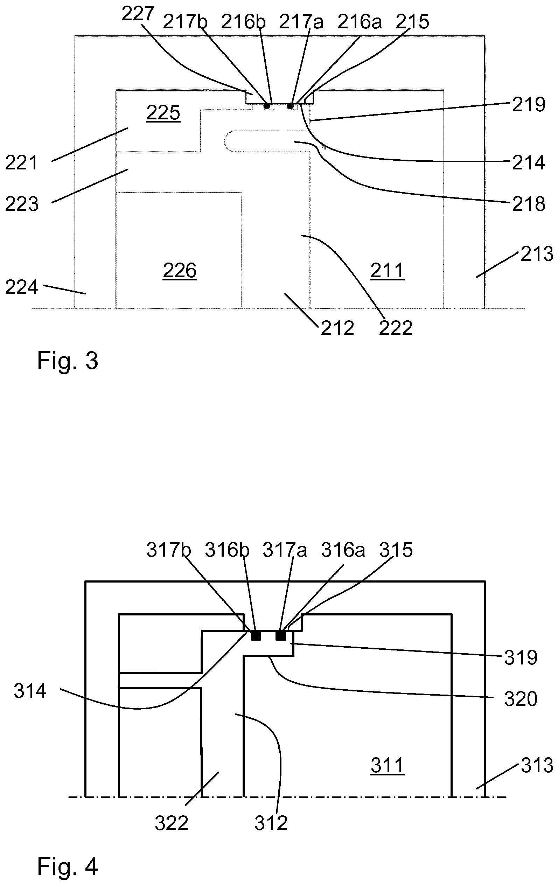

Gemäss Fig. 3 wird ein nur schematisch dargestellter, rotationssymmetrischer Hochdruckraum 211 von einem Begrenzungselement 212 und einem Abschlusselement 213 begrenzt, welche Teil einer radial ausgerichteten Dichtungsanordnung für den Hochdruckraum 211 sind. Das Abschlusselement 213 ist als ein hauptsächlich zylinderförmiges Gehäuse ausgeführt, das durch das Begrenzungselement 212 in den Hochdruckraum 211 und einen Niederdruckraum 221 geteilt wird. Das Begrenzungselement 212 ist einteilig aufgebaut und besteht aus einem hauptsächlich scheibenförmigen Grundelement 222 und einem hauptsächlich zylinderförmigen Abstützelement 223. Das Grundelement 222 trennt den Hochdruckraum 211 vom Niederdruckraum 221 ab und stützt sich dazu über das Abstützelement 223 an einer dem Hochdruckraum 211 gegenüberliegenden Bodenfläche 224 des Abschlusselements 213 ab. Das Abstützelement 223 weist nicht dargestellte, in radialer Richtung ausgerichtete Durchgänge auf, wodurch ein äusserer Bereich 225 mit einem inneren Bereich 226 des Niederdruckraums 221 verbunden wird.

Das Grundelement 222 des Begrenzungselements 212 weist radial aussen eine umlaufende äussere Dichtfläche 214 auf, welche mit einer inneren Dichtfläche 215 des Abschlusselements 213 in Kontakt steht und damit den Hochdruckraum 211 vom Niederdruckraum 221 abdichtet. Die innere Dichtfläche 215 des Abschlusselements 213 ist dabei an einem umlaufenden, nach innen ragenden Vorsprung 227 ausgebildet.

Die äussere Dichtfläche 214 des Begrenzungselements 212 weist zwei umlaufende Nuten 216a, 216b auf, in denen jeweils ein O-Ring 217a, 217b zur druckdichten Abdichtung angeordnet ist. Die Nuten und der O-Ring können auch im Abschlusselement vorgesehen sein. Es ist auch möglich, dass nur ein O-Ring vorgesehen ist.

Das Grundelement 222 des Begrenzungselements 212 weist eine zum Druckraum 211 offene Ausnehmung 218 auf, die so angeordnet ist, dass die Nuten 216a, 216b und die O-Ringe 217a, 217b und in diesem Fall die gesamte äussere Kontaktfläche 214 zwischen der Ausnehmung 218 und der inneren Kontaktfläche 215 des Abschlusselements 213 angeordnet sind. Damit ergibt sich am Begrenzungselement 212 ein umlaufender Randbereich 219, an dem Nuten 216a, 216b und die O-Ringe 217a, 217b angeordnet sind. Dieser Randbereich 219 ist zumindest in axialer Richtung in begrenztem Masse elastisch.

Ist der Druck im Hochdruckraum 211 höher als ausserhalb Abschlusselements 213, so wirkt auf das Abschlusselement 213 eine Kraft in radialer Richtung nach aussen. Diese Kraft kann so gross sein, dass sich das Abschlusselement 213 nach aussen wölbt. Würde der Randbereich 219 des Begrenzungselements 212 seine Position unverändert beibehalten, so ergäbe sich ein Spalt zwischen dem Begrenzungselement 212 und dem Abschlusselement 213.

Durch die Öffnung der Ausnehmung 218 in Richtung Hochdruckraum 211 herrscht in der Ausnehmung 218 der selbe Druck wie im Hochdruckraum 211. Damit wirkt auch auf den Randbereich 219 und damit auch auf die äussere Kontaktfläche 214 des Begrenzungselements 212 eine nach aussen, also in Richtung innere Kontaktfläche 215 des Abschlusselements 213 gerichtete Kraft. Durch die genannte Elastizität des Randbereichs 219 bewegt sich dieser bei einer beschriebenen Wölbung des Abschlusselements 213 entsprechend der Wölbung des Abschlusselements 213 ebenfalls nach aussen. Damit wird die Entstehung eines Spalts zwischen dem Begrenzungselement 212 und dem Abschlusselement 213 verhindert, so dass die Dichtfunktion der O-Ringe 217a, 217b auch bei einer etwaigen Wölbung des Abschlusselements 213 erhalten bleibt.

In Fig. 4 ist eine zweite Ausführungsform einer radial ausgerichteten Dichtungsanordnung dargestellt. Der Aufbau der Dichtungsanordnung weist dabei viele Gemeinsamkeiten mit der Dichtungsanordnung aus Fig. 3 auf, weshalb nur auf die Unterschiede eingegangen wird.

Ein Grundelement 322 eines Begrenzungselements 312 weist einen axial orientierten, vorstehenden Kragen 319 auf, der zumindest in radialer Richtung eine gewisse Flexibilität aufweist. An dem Kragen 319 ist eine gesamte äussere Kontaktfläche 314 des Begrenzungselements 312, sowie zwei umlaufende Nuten 316a, 316b und jeweils ein darin angeordneter O-Ring 317a, 317b angeordnet. Die äussere Kontaktfläche 314 des Begrenzungselements 312 und die O-Ringe 317a, 317b stehen in Kontakt mit einer inneren Kontaktfläche 315 eines Abschlusselements 313.

Der Kragen 319 weist eine zur äusseren Kontaktfläche 314 des Begrenzungselements 312 parallele Innenfläche 320 auf, auf die ein in einem Hochdruckraum 311 herrschender Druck wirkt. Bei einer etwaigen Wölbung des Abschlusselements 313 nach aussen bewegt sich der Kragen 319 des Begrenzungselements 312 analog zum Randbereich 216 aus Fig. 3 ebenfalls nach aussen.

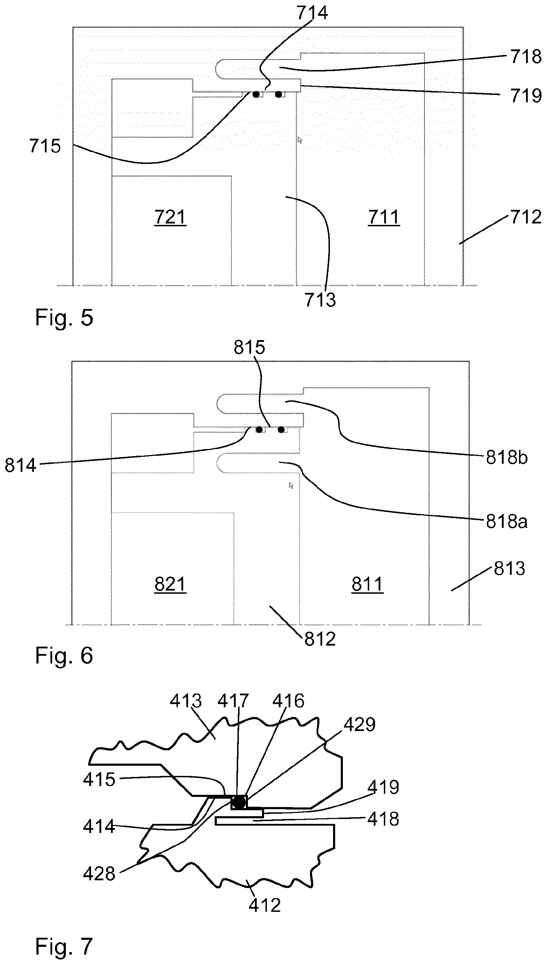

In Fig. 5 ist eine dritte Ausführungsform einer radial ausgerichteten Dichtungsanordnung dargestellt, die nicht zur Erfindung gehört. Der Aufbau der Dichtungsanordnung weist dabei viele Gemeinsamkeiten mit der Dichtungsanordnung aus Fig. 3 auf, weshalb nur auf die Unterschiede eingegangen wird.

Gemäss Fig. 5 wird ein Hochdruckraum 711 von einem Begrenzungselement 712 und einem Abschlusselement 713 begrenzt, welche Teil einer radial ausgerichteten Dichtungsanordnung für den Hochdruckraum 711 sind. Im Gegensatz zu Fig. 3 ist hier das Begrenzungselement 712 als ein hauptsächlich zylinderförmiges Gehäuse ausgeführt, das durch das Abschlusselement 713 in den Hochdruckraum 711 und einen Niederdruckraum 721 geteilt wird.

Das als Gehäuse ausgeführte Begrenzungselement 712 weist eine zum Druckraum 711 offene Ausnehmung 718 auf, die so angeordnet ist, dass eine gesamte äussere Kontaktfläche 714 des Begrenzungselements 712 zwischen der Ausnehmung 718 und einer inneren Kontaktfläche 715 des Abschlusselements 713 angeordnet sind. Damit ergibt sich am Begrenzungselement 712 ein umlaufender Randbereich 719, der zumindest in axialer Richtung in begrenztem Masse elastisch ist.

In Fig. 6 ist eine vierte Ausführungsform einer radial ausgerichteten Dichtungsanordnung dargestellt. Der Aufbau der Dichtungsanordnung ist eine Kombination der Dichtungsanordnungen aus Fig. 3 und Fig. 5.

Gemäss Fig. 6 wird ein Hochdruckraum 811 von einem Begrenzungselement 812 und einem Abschlusselement 813 begrenzt, welche Teil einer radial ausgerichteten Dichtungsanordnung für den Hochdruckraum 811 sind. Wie in Fig. 3 ist das Abschlusselement 813 als ein hauptsächlich zylinderförmiges Gehäuse ausgeführt, das durch das Begrenzungselement 812 in den Hochdruckraum 811 und einen Niederdruckraum 821 geteilt wird.

Das Begrenzungselement 812 weist eine zum Druckraum 811 offene Ausnehmung 818a auf, die so angeordnet ist, dass eine äussere Kontaktfläche 814 des Begrenzungselements 812 zwischen der Ausnehmung 818a und einer inneren Kontaktfläche 815 des Abschlusselements 813 angeordnet sind.

Ausserdem weist das Abschlusselement 813 eine zusätzliche, zum Druckraum 811 offene Ausnehmung 818b auf. Diese ist so angeordnet, dass die äussere Kontaktfläche 814 des Begrenzungselements 812 und die innere Kontaktfläche 815 des Abschlusselements 813 zwischen den beiden Ausnehmungen 818a, 818b angeordnet sind.

In Fig. 7 ist ein Dichtungsbereich einer weiteren Ausführungsform einer radial orientierten Dichtungsanordnung dargestellt. Der grundsätzliche Aufbau der Dichtungsanordnung ist vergleichbar mit denen der Fig. 3. Der Unterschied besteht neben der Tatsache, dass nur ein O-Ring 417 verwendet wird, darin, dass eine äussere Kontaktfläche 414 eines Begrenzungselements 412 nicht plan ausgeführt ist und eine Nut für einen O-Ring aufweist, sondern einen Absatz 428 radial nach innen aufweist. Eine innere Kontaktfläche 415 eines Abschlusselements 413 ist ebenfalls nicht plan ausgeführt und weist axial versetzt ebenfalls einen Absatz 429 auf. Die Absätze 428 und 429 sind so ausgeführt und angeordnet, dass sie einen im Querschnitt rechteckigen Aufnahmeraum 416 bilden, in dem der O-Ring 417 angeordnet ist. Radial innerhalb der Absätze 428, 429 und damit auch des Aufnahmeraums 416 weist das Begrenzungselement 412 eine in Richtung eines nicht weiter dargestellten Hochdruckraums offene Ausnehmung 418 auf. Damit verfügt das Begrenzungselement 412 ebenfalls über einen flexiblen Randbereich 419, an dem der Aufnahmeraum 416 und der O-Ring 417 angeordnet sind.

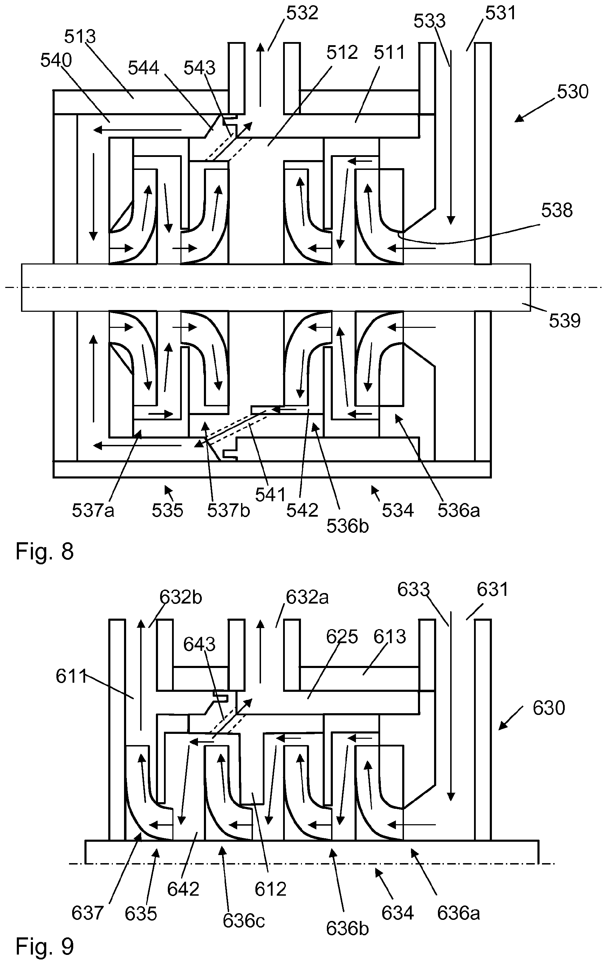

Gemäss Fig. 8 weist eine Pumpe 530 ein als ein Gehäuse ausgeführtes Abschlusselement 513 mit einem Pumpeneingang 531 und einem Pumpenausgang 532 auf. Über den Pumpeneingang 531 saugt die Pumpe 530 Fluid, beispielsweise in Form von Wasser, an und gibt das Fluid über den Pumpenausgang 532 unter erhöhtem Druck wieder aus. Der Fluss des Fluids in der Pumpe 530 wird durch Pfeile 533 dargestellt, wobei nicht jedem Pfeil ein Bezugszeichen zugeordnet ist. Die Pumpe 530 ist als eine Pumpe mit einer ersten Teil-Pumpe 534 und einer dieser nachgeschalteten zweiten Teil-Pumpe 535 ausgeführt. Die erste Teil-Pumpe 534 besteht aus zwei hinter einander geschalteten Pumpenstufen 536a und 536b und die zweite Teil-Pumpe 535 aus zwei hinter einander geschalteten Pumpenstufen 537a und 537b. Die Pumpenstufen 536a, 536b, 537a, 537b sind alle vom Grundsatz her identisch aufgebaut. Sie enthalten alle einen Impeller 538, der drehfest mit einer Antriebswelle 539 verbunden ist. Die Antriebswelle 539 wird von einer nicht dargestellten Antriebsmaschine angetrieben, so dass der Impeller 538 gemeinsam mit der Antriebswelle 538 rotiert. Dem Impeller 538 wird radial innen Fluid zugeführt, das auf bekannte Weise radial aussen den Impeller 538 unter höherem Druck wieder verlässt. Die Pumpe 530 ist also als eine mehrstufige Radial-Kreiselpumpe ausgeführt. Nach Verlassen der ersten Pumpenstufe 536a der ersten Teilpumpe 534 wird das Fluid der axial benachbarten zweiten Pumpenstufe 536b der ersten Teilpumpe 534 zugeführt. Eine Strömungsrichtung des Fluids verläuft damit in der ersten Teilpumpe 534 in der Fig. 8 von rechts nach links.

Die erste Teil-Pumpe 534 wird von der zweiten Teil-Pumpe 535 durch ein Begrenzungselement 512 abgetrennt, das axial neben der zweiten Pumpenstufe 536b der ersten Teil-Pumpe 534 angeordnet ist. Das Begrenzungselement 512 dreht sich nicht mit der Antriebswelle 539 mit. An das Begrenzungselement 512 schliesst sich in axialer Richtung die zweite Pumpenstufe 537b und dann die erste Pumpenstufe 537a der zweiten Teil-Pumpe 535 an, wobei die Pumpenstufen 537a, 537b der zweiten Teil-Pumpe 535 im Vergleich zu den Pumpenstufen 536a, 536b der ersten Teil-Pumpe 534 gespiegelt angeordnet sind. Aus diesem Grund wird diese Anordnung der beiden Teil-Pumpen 534 und 535 als eine back-to-back Anordnung bezeichnet.

Der ersten Pumpenstufe 537a der zweiten Teil-Pumpe 535 wird das Fluid über einen Zuführkanal 540 zugeführt, der zunächst aussen an der zweiten Pumpenstufe 537b der zweiten Teil-Pumpe 535 axial vorbei führt und dann radial nach innen zum Eingang der ersten Pumpen-Stufe 537a der zweiten Teil-Pumpe 535. Vom Ausgang der ersten Pumpenstufe 537a wird das Fluid dann zum Eingang der zwischen der ersten Pumpenstufe 537a und dem Begrenzungselement 512 angeordneten zweiten Pumpenstufe 537b der zweiten Teil-Pumpe 535 geleitet. Die Strömungsrichtung des Fluids in der zweiten Teil-Pumpe 535 läuft damit in der in der Fig. 8 von links nach rechts, also entgegengesetzt zur Strömungsrichtung in der ersten Teil-Pumpe.

Um das Fluid von der ersten Teil-Pumpe 534 zur zweiten Teil-Pumpe 535 zu leiten, weist das Begrenzungselement 512 einen ersten Übergangskanal 541 auf, der von einem Ausgangsraum 542 der zweiten Pumpenstufe 536b der ersten Teil-Pumpe 534 zum Zuführkanal 540 für die erste Pumpenstufe 537a der zweiten Teil-Pumpe 535 führt. Ausserdem weist das Begrenzungselement 512 einen zweiten Übergangskanal 543 auf, der von einem Ausgangsraum 544 der zweiten Pumpenstufe 537b der zweiten Teil-Pumpe 535 zu einem mit dem Pumpenausgang 532 verbundenen Hochdruckraum 511 in Form eines Pumpenausgangsraums führt. Damit grenzt der Hochdruckraum 511 an den Zuführkanal 540 zur ersten Pumpenstufe 537a der zweiten Teil-Pumpe 535 an, wobei die Abtrennung und Abdichtung gegenüber dem als Gehäuse ausgeführten Abschlusselement 513 durch das Begrenzungselement 512 erfolgt. Im Zuführkanal 540 herrscht ein im Vergleich zum Hochdruckraum 511 geringerer Druck, so dass der Zuführkanal 540 auch als ein Niederdruckraum bezeichnet werden kann. Das als Gehäuse ausgeführte Abschlusselement 513 weist im Bereich des Begrenzungselements 512 eine zylindrische Innenkontur auf. Die Abdichtung zwischen dem Hochdruckraum 511 und dem Zuführkanal 540 erfolgt entsprechend der in Fig. 3 dargestellten Abdichtung, wobei in Fig. 6 auf eine Darstellung von Details wie beispielsweise den O-Ring und die zugehörige Nut verzichtet wurde. Durch die in der Beschreibung zur Fig. 3 beschriebene Funktionalität der Abdichtung ist eine funktionssichere Abdichtung auch dann gewährleistet, wenn sich das Abschlusselement 513 in Form des Gehäuses auf Grund des Drucks im Hochdruckraum 511 aufweitet.

In Fig. 9 ist eine Pumpe 630 mit einem Pumpeneingang 631 und einem ersten Pumpenausgang 632a und einem zweiten Pumpenausgang 632b dargestellt, wobei der Fluss des Fluids ebenfalls durch Pfeile 633 angezeigt wird. Die Pumpe 630 ist ebenfalls als eine Pumpe mit einer ersten Teil-Pumpe 634 und einer nachgeschalteten zweiten Teil-Pumpe 635 ausgeführt, wobei die erste Teil-Pumpe 634 über drei hintereinander geschaltete Pumpenstufen 636a, 636b, 636c und die zweite Teil-Pumpe 635 über eine Pumpenstufen 637 verfügt. Die erste Teil-Pumpe 634 wird von der zweiten Teil-Pumpe 635 ebenfalls von einem Begrenzungselement 612 abgetrennt.

Über den ersten Pumpenausgang 632a wird Fluid vom Ausgang der ersten Teil-Pumpe 634 abgeführt. Dazu ist der erste Pumpenausgang 632a über einen ersten Pumpenausgangsraum 625 und einen Übergangskanal 643 des Begrenzungselements 612 mit einem Ausgangsraum 642 der dritten Pumpenstufe 636c der ersten Teil-Pumpe 634 verbunden.

Der Ausgangsraum 642 der dritten Pumpenstufe 636c ist ausserdem auch mit dem Eingang der Pumpenstufe 637 der zweiten Teil-Pumpe 635 verbunden, so dass sich der Fluidstrom aufteilt und zum einen Teil in Richtung erstem Pumpenausgang 632a und zum anderen Teil zur zweiten Teil-Pumpe 635 fliesst.

Die zweite Teil-Pumpe 635 fördert in einen mit dem zweiten Pumpenausgang 632b verbundenen Hochdruckraum 611 in Form eines zweiten Pumpenausgangsraums. Wegen der Druckerhöhung durch die zweite Teil-Pumpe 635 ist der Druck im Hochdruckraum 611 höher als im ersten Pumpenausgangsraum 625, der damit als ein Niederdruckraum bezeichnet werden kann.

Das als Gehäuse ausgeführte Abschlusselement 613 weist im Bereich des Begrenzungselements 612 eine zylindrische Innenkontur auf. Die Abdichtung zwischen dem Hochdruckraum 611 und dem ersten Pumpenausgangsraum 625 erfolgt entsprechend der in Fig. 3 dargestellten Abdichtung, wobei in Fig. 9 auf eine Darstellung von Details wie beispielsweise den O-Ring und die zugehörige Nut verzichtet wurde. Der Unterschied besteht nur darin, dass der Hochdruckraum 611 bezüglich des Begrenzungselements 612 auf der anderen Seite angeordnet ist. Durch die in der Beschreibung zur Fig. 3 beschriebene Funktionalität der Abdichtung ist eine funktionssichere Abdichtung auch dann gewährleistet, wenn sich das Abschlusselement 613 in Form des Gehäuses auf Grund des Drucks im Hochdruckraum 611 aufweitet.

## Patentansprüche

1. Pumpe mit einer Dichtungsanordnung für einen Hochdruckraum (11, 111, 211, 311, 411, 511, 611, 811) mit
- einem Begrenzungselement (12, 112, 212, 312, 412, 512, 612, 812), welches eine äussere Dichtfläche (14, 114, 214, 314, 414, 814) aufweist, und
- einem Abschlusselement (13, 113, 213, 313, 413, 513, 613, 813), welches eine innere Dichtfläche (15, 115, 215, 315, 415, 815) aufweist, wobei die äussere Dichtfläche (14, 114, 214, 314, 414, 814) und die innere Dichtfläche (15, 115, 215, 315, 415, 815) so angeordnet sind, dass über einen Kontakt der beiden Dichtflächen (14, 114, 214, 314, 414, 814; 15, 115, 215, 315, 415, 715, 815) eine Abdichtung des Hochdruckraums (11, 111, 211, 311, 411, 511, 611, 811) erreicht wird, wobei
das Begrenzungselement (12, 112, 212, 312, 412, 512, 612, 812) so ausgeführt ist, dass auf Grund eines Drucks im Hochdruckraum (11, 111, 211, 311, 411, 511, 611, 811) eine Kraft in Richtung innere Dichtfläche (15, 115, 215, 315, 415, 815) auf die äussere Dichtfläche (14, 114, 214, 314, 414, 814) wirken kann, wobei das Begrenzungselement (12, 112, 212, 312, 412, 812) oder das Abschlusselement (13, 113, 213, 313, 413, 813) ein Dichtelement (17, 117, 217a, 217b, 317a, 317b, 417) aufweisen, **dadurch gekennzeichnet, dass** das Begrenzungselement (12, 112, 212, 312, 412, 512, 612, 812) als ein Teil eines Gehäuses des Hochdruckraums (11, 111, 211, 311, 411, 511, 611, 811) oder als ein Trennelement zu einem anderen Druckraum ausgebildet ist, und dass das Begrenzungselement (12, 112, 212, 312, 412, 812) zumindest im Bereich der äusseren Dichtfläche (14, 114, 214, 314, 414, 814) so weit flexibel ausgeführt ist, dass es eine Bewegung der inneren Dichtfläche (15, 115, 215, 315, 415, 815) des Abschlusselements (13, 113, 213, 313, 413, 513, 613, 813) ausgleichen kann.

2. Pumpe nach Anspruch 1, **dadurch gekennzeichnet, dass** das Begrenzungselement (112, 312) einen vorstehenden Kragen (119, 319) aufweist, welcher zumindest einen Teil der äusseren Dichtfläche (114, 314) bildet und so ausgeführt ist, dass der Druck im Hochdruckraum (111, 311) auf eine der äusseren Dichtfläche (114, 314) gegenüberliegende Innenfläche (120) des Kragens (119, 319) wirkt.

3. Pumpe nach Anspruch 1 oder 2, **dadurch gekennzeichnet, dass** das Begrenzungselement (12, 212, 812) eine in Richtung Hochdruckraum (11, 211, 812) offene Ausnehmung (18, 218, 818a) aufweist, welche so angeordnet ist, dass zumindest ein Teil der äusseren Dichtfläche (14, 214, 814) zwischen der Ausnehmung (18, 218, 818a) und der inneren Dichtfläche (15, 215, 815) des Abschlusselements (13, 213, 813) angeordnet ist.

4. Pumpe nach Anspruch 1, 2 oder 3, **dadurch gekennzeichnet, dass** das Abschlusselement (813) so ausgeführt ist, dass auf Grund des Drucks im Hochdruckraum (811) eine Kraft in Richtung äussere Dichtfläche (814) auf die innere Dichtfläche (815) wirken kann.

5. Pumpe nach Anspruch 4, **dadurch gekennzeichnet, dass** das Abschlusselement (813) eine zweite, in Richtung Hochdruckraum (811) offene Ausnehmung (818b) aufweist, welche so angeordnet ist, dass zumindest ein Teil der inneren Dichtfläche (815) zwischen der zweiten Ausnehmung (818b) und der äusseren Dichtfläche (814) des Begrenzungselements (813) angeordnet ist.

6. Pumpe nach einem der Ansprüche 1-5, **dadurch gekennzeichnet, dass** das Dichtelement (17, 117, 217a, 217b, 317a, 317b) als ein O-Ring ausgeführt ist, der in einer Nut (16, 116, 216a, 216b, 316a, 316b) des Begrenzungselements (12, 112, 212, 312) oder des Abschlusselements (13, 113, 213, 313) angeordnet ist.

7. Pumpe nach einem der Ansprüche 1-6, **dadurch gekennzeichnet, dass** das Begrenzungselement (412) und das Abschlusselement (413) so ausgeführt und angeordnet sind, dass sie einen Aufnahmeraum (416) bilden, in welchem ein O-Ring (417) angeordnet ist.

8. Pumpe nach einem der Ansprüche 1 bis 7, **gekennzeichnet durch** wenigstens eine erste Teil-Pumpe (534, 634) und eine zweite, nachgeschaltete Teil-Pumpe (535, 635), wobei das Begrenzungselement (512, 612) als ein Trennelement zwischen der ersten und zweiten Teil-Pumpe (534, 634; 535, 635) ausgeführt ist.

9. Pumpe nach Anspruch 8, **dadurch gekennzeichnet, dass** der Hochdruckraum (511, 611) als ein Ausgangsraum der zweiten Teil-Pumpe (535, 635) ausgeführt ist.

10. Pumpe nach einem der Ansprüche 1 bis 9, **gekennzeichnet durch** einen ersten Pumpenausgang (632a) und einen zweiten Pumpenausgang (632b), wobei der erste Pumpenausgang (632a) mit einem Ausgang der ersten Teil-Pumpe (634) und der zweite Pumpenausgang (632b) mit einem Ausgang der zweiten Teil-Pumpe (635) verbunden ist und das Begrenzungselement (612) zwischen dem ersten und zweiten Pumpenausgang (632a, 632b) angeordnet ist.

11. Pumpe nach einem der Ansprüche 1 bis 9, **dadurch gekennzeichnet, dass** die erste und die zweite Teil-Pumpe (534, 535) so angeordnet sind, dass eine erste Strömungsrichtung in der ersten Teil-Pumpe (534) und eine zweite Strömungsrichtung in der zweiten Teil-Pumpe (535) entgegengesetzt orientiert sind und das Begrenzungselement (512) zwischen dem Ausgang der ersten Teil-Pumpe (534) und einem Eingang der zweiten Teil-Pumpe (535) angeordnet ist.

12. Pumpe nach einem der Ansprüche 1 bis 11, **dadurch gekennzeichnet, dass** das Begrenzungselement (512, 612) wenigstens einen Übergangskanal (541, 543, 643) aufweist.

## Claims

1. A pump with a sealing arrangement for a high-pressure space (11, 111, 211, 311, 411, 511, 611, 811) having:
- a bounding element (12, 112, 212, 312, 412, 512, 612, 812) which has an outer sealing surface (14, 114, 214, 314, 414, 814) and
- a termination element (13, 113, 213, 313, 413, 513, 613, 813) which has an inner sealing surface (15, 115, 215, 315, 415, 515, 615, 815),
wherein the outer sealing surface (14, 114, 214, 314, 414, 814) and the inner sealing surface (15, 115, 215, 315, 415, 815) are arranged such that a sealing-off of the high-pressure space (11, 111, 211, 311, 411, 511, 611, 811) is achieved via a contact of the two sealing surfaces (14, 114, 214, 314, 414, 814; 15, 115, 215, 315, 415, 815), wherein the bounding element (12, 112, 212, 312, 412, 512, 612, 812) is designed such that a force in the direction of the inner sealing surface (15, 115, 215, 315, 415, 815) can act on the outer sealing surface (14, 114, 214, 314, 414, 814) due to a pressure in the high-pressure space (11, 111, 211, 311, 411, 511, 611, 811), and wherein the bounding element (12, 112, 212, 312, 412, 812) or the termination element (13, 113, 213, 313, 413, 813) has a sealing element (17, 117, 217a, 217b, 317a, 317b, 417), **characterized in that** the bounding element (12, 112, 212, 312, 412, 512, 612, 812) is designed as a part of a housing of the high-pressure space (11, 111, 211, 311, 411, 511, 611, 811) or as a separation element to a different pressure space, and **in that** the bounding element (12, 112, 212, 312, 412, 812) at least in the area of the outer sealing surface (14, 114, 214, 314, 414, 814) is flexible enough to compensate for movement of the inner sealing surface (15, 115, 215, 315, 415, 815) of the end element (13, 113, 213, 313, 413, 513, 613, 813).

2. A pump in accordance with claim 1, **characterized in that** the bounding element (112, 312) has a projecting collar (119, 319) which forms at least a part of the outer sealing surface (114, 314) and is designed such that the pressure in the high-pressure space (111, 311) acts on an inner surface (120) of the collar (119, 319) lying opposite of the outer sealing surface (114, 314).

3. A pump in accordance with claim 1 or claim 2, **characterized in that** the bounding element (12, 212, 812) has a recess (18, 218, 818a) open in the direction of the high-pressure space (11, 211, 812) which recess is arranged such that at least a part of the outer sealing surface (14, 214, 814) is arranged between the re-cess (18, 218, 818a) and the inner sealing surface (15, 215, 815) of the termination element (13, 213, 813).

4. A pump in accordance with claim 1, claim 2 or claim 3, **characterized in that** the termination element (813) is designed such that a force can act on the inner sealing surface (815) in the direction of the outer sealing surface (814) due to the pressure in the high-pressure space (811).

5. A pump in accordance with 4, **characterized in that** the termination element (813) has a second recess (818b) open in the direction of the high-pressure space (811) which recess is arranged such that at least a part of the inner sealing surface (815) is arranged between the second recess (818b) and the outer sealing surface (814) of the bounding element (813).

6. A pump in accordance with any of the claims 1 to 5, **characterized in that** the sealing element (17, 117, 217a, 217b, 317a, 317b) is designed as an O-ring which is arranged in a groove (16, 116, 216a, 216b, 316a, 316b) of the bounding element (12, 112, 212, 312) or of the termination element (13, 113, 213, 313).

7. A pump in accordance with any of the claims 1 to 6, **characterized in that** the bounding element (412) and the termination element (413) are designed and arranged such that they form a reception space (416) in which an O-ring (417) is arranged.

8. A pump in accordance with claims 1 to 7, **characterized by** at least a first partial pump (534, 634) and a second, downstream partial pump (535, 635), wherein the bounding element (512, 612) is designed as a separation element between the first and the second partial pump (534, 634; 535, 635).

9. A pump in accordance with claim 8, **characterized in that** the high-pressure space (511, 611) is designed as an outlet space of the second partial pump (535, 635).

10. A pump in accordance with any one of the claims 1 to 9, **characterized by** a first pump outlet (632a) and a second pump outlet (632b), wherein the first pump outlet (632a) is connected to an outlet of the first partial pump (634) and the second pump outlet (632b) is connected to an outlet of the second partial pump (625) and the bounding element (612) is arranged between the first and the second partial pump outlet (632a, 632b).

11. A pump in accordance with any one of the claims 1 to 9, **characterized in that** the first and the second partial pump (534, 535) are arranged such that a first flow direction in the first partial pump (534) and a second flow direction in the second partial pump (535) are orientated opposite from one another and the bounding element (512) is arranged between the outlet of the first partial pump (534) and an in-let of the second partial pump (535).

12. A pump in accordance with any one of the claims 1 to 11, **characterized in that** the bounding element (512, 612) has at least one transfer passage (541, 543, 643).

## Revendications

1. Une pompe avec un ensemble à étanchéité pour une chambre à haute pression (11, 111, 211, 311, 411, 511, 611, 811) avec
- un élément de limitation (12, 112, 212, 312, 412, 512, 612, 812) qui présente une surface d'étanchéité extérieure (14, 114, 214, 314, 414, 814), et
- un élément de fermeture (13, 113, 213, 313, 413, 513, 613, 813) qui présente une surface d'étanchéité intérieure (15, 115, 215, 315, 415, 815), dans lequel la surface d'étanchéité extérieure (14, 114, 214, 314, 414, 814) et la surface d'étanchéité intérieure (15, 115, 215, 315, 415, 815) sont disposées de telle sorte que, par un contact des deux surfaces d'étanchéité (14, 114, 214, 314, 414, 814 ; 15, 115, 215, 315, 415, 715, 815), une étanchéité de la chambre à haute pression (11, 111, 211, 311, 411, 511, 611, 811) est atteint, dans lequel l'élément de fermeture (12, 112, 212, 312, 412, 512, 612, 812) est conçu de telle sorte qu'en raison d'une pression dans la chambre à haute pression (11, 111, 211, 311, 411, 511, 611, 811), une force en direction de la surface d'étanchéité intérieure (15, 115, 215, 315, 415, 815) peut agir sur la surface d'étanchéité extérieure (14, 114, 214, 314, 414, 814), dans lequel l'élément de limitation (12, 112, 212, 312, 412, 812) ou l'élément de fermeture (13, 113, 213, 313, 413, 813) présentent un élément d'étanchéité (17, 117, 217a, 217b, 317a, 317b, 417), **caractérisé en ce que** l'élément de limitation (12, 112, 212, 312, 412, 512, 612, 812) est conçu comme une partie d'un boîtier de la chambre à haute pression (11, 111, 211, 311, 411, 511, 611, 811) ou comme un élément de séparation vers une autre chambre de pression, et **en ce que** l'élément de limitation (12, 112, 212, 312, 412, 812) est conçu pour être flexible, au moins dans la région de la surface d'étanchéité extérieure (14, 114, 214, 314, 414, 814), de telle sorte qu'il peut compenser un mouvement de la surface d'étanchéité intérieure (15, 115, 215, 315, 415, 815) de l'élément de fermeture (13, 113, 213, 313, 413, 513, 613, 813).

2. Une pompe selon la revendication 1, **caractérisée en ce que** l'élément de limitation (112, 312) présente un collet en saillie (119, 319) qui forme au moins une partie de la surface d'étanchéité extérieure (114, 314) et est conçu de telle sorte que la pression dans la chambre à haute pression (111, 311) agit sur une surface intérieure (120) du collet (119, 319) opposée à la surface d'étanchéité extérieure (114, 314).

3. Une pompe selon la revendication 1 ou 2, **caractérisée en ce que** l'élément de limitation (12, 212, 812) présente un évidement (18, 218, 818a) qui est ouvert en direction de la chambre à haute pression (11, 211, 812) et qui est disposé de telle sorte qu'au moins une partie de la surface d'étanchéité extérieure (14, 214, 814) est disposée entre l'évidement (18, 218, 818a) et la surface d'étanchéité intérieure (15, 215, 815) de l'élément de fermeture (13, 213, 813).

4. Une pompe selon la revendication 1, 2 ou 3, **caractérisée en ce que** l'élément de fermeture (813) est conçu de telle sorte qu'en raison de la pression dans la chambre à haute pression (811), une force en direction de la surface d'étanchéité extérieure (814) peut agir sur la surface d'étanchéité intérieure (815).

5. Une pompe selon la revendication 4, **caractérisée en ce que** l'élément de fermeture (813) présente un deuxième évidement (818b) qui est ouvert en direction de la chambre à haute pression (811) et qui est disposé de telle sorte qu'au moins une partie de la surface d'étanchéité intérieure (815) est disposée entre le deuxième évidement (818b) et la surface d'étanchéité extérieure (814) de l'élément de limitation (813).

6. Une pompe selon l'une des revendications 1 à 5, **caractérisée en ce que** l'élément d'étanchéité (17, 117, 217a, 217b, 317a, 317b) est conçu comme un joint torique qui est disposé dans une rainure (16, 116, 216a, 216b, 316a, 316b) de l'élément de limitation (12, 112, 212, 312) ou de l'élément de fermeture (13, 113, 213, 313).

7. Une pompe selon l'une des revendications1 à 6, **caractérisée en ce que** l'élément de limitation (412) et l'élément de fermeture (413) sont conçus et disposés de telle sorte qu'ils forment un espace de réception (416) dans lequel un joint torique (417) est disposé.

8. Une pompe selon l'une des revendications 1 à 7, **caractérisée par** au moins une première pompe partielle (534, 634) et une deuxième pompe partielle (535, 635) en aval, dans laquelle l'élément de limitation (512, 612) est conçu comme un élément de séparation entre la première et la deuxième pompe partielle (534, 634 ; 535, 635).

9. Une pompe selon la revendication 8, **caractérisée en ce que** la chambre à haute pression (511, 611) est conçue comme une chambre de sortie de la deuxième pompe partielle (535, 635).

10. Une pompe selon l'une des revendications1 à 9, **caractérisée par** une première sortie de pompe (632a) et une deuxième sortie de pompe (632b), dans laquelle la première sortie de pompe (632a) est connectée à une sortie de la première pompe partielle (634) et la deuxième sortie de pompe (632b) est connectée à une sortie de la deuxième pompe partielle (635), et l'élément de limitation (612) est disposé entre la première et la deuxième sortie de pompe (632a, 632b).

11. Une pompe selon l'une des revendications 1 à 9, **caractérisée en ce que** la première et la deuxième pompe partielle (534, 535) sont disposées de telle sorte qu'une première direction d'écoulement dans la première pompe partielle (534) et une deuxième direction d'écoulement dans la deuxième pompe partielle (535) sont orientées de manière opposée et l'élément de limitation (512) est disposé entre la sortie de la première pompe partielle (534) et une entrée de la deuxième pompe partielle (535).

12. Une pompe selon l'une des revendications 1 à 11, **caractérisée en ce que** l'élément de limitation (512, 612) présente au moins un canal de transition (541, 543, 643).
